# EUROPEAN PATENT SPECIFICATION

(11) **EP 3 771 581 B1**
(45) Date of publication and mention of the grant of the patent: **12.07.2023**
(21) Application number: 20188503.5
(22) Date of filing: 30.07.2020
(51) Int. Cl.: B60K 17/28, B60K 17/34, B60K 6/20, B60K 6/387, B60K 6/48, B60K 6/485, B60W 20/16, B60W 20/40, B60W 30/188

(54) **A VEHICLE SYSTEM FOR USE IN CONFINED BUILDINGS**
FAHRZEUGSYSTEM ZUR VERWENDUNG IN ABGEGRENZTEN GEBÄUDEN
SYSTÈME DE VÉHICULE À UTILISER DANS DES BÂTIMENTS CONFINÉS

(30) Priority: 31.07.2019 IT 201900013389
(43) Date of publication of application: 03.02.2021
(73) Proprietor: CNH Industrial Italia S.p.A., 10156 Torino (IT)
(72) Inventor: Tenneriello, Luigi, 41030 Bomporto (IT)
(74) Representative: CNH Industrial IP Department

(56) References cited:
- EP-A1- 2 551 140
- EP-A1- 2 730 444
- US-A1- 2009 018 716
- US-A1- 2015 149 053

## Description

### TECHNICAL FIELD

The invention concerns a vehicle system including a vehicle, in particular an agricultural tractor, for use in confined buildings.

### BACKGROUND OF THE INVENTION

As known, many kinds of vehicles are powered by internal combustion engines.

During operation, internal combustion engines are known to produce exhaust gases containing pollutants, such as CO2, CO, NOx, sulfur compounds, and the like.

Moreover, vehicles are also known to comprise parts, such as the exhaust after-treatment system, which typically tend to exhale unpleasing smells during operation, especially when high operative temperatures are reached.

In view of the above, the use of vehicles within confined buildings is generally undesirable and mainly discouraged, in particular when the pollutants and smells likely remain entrapped within the building, to the disadvantage of people and/or animals therein.

Furthermore, the produced exhaust gases may possibly cause damages to the building, especially in case the latter has an inflammable roof.

However, some industrially important applications, for instance in the field of agriculture, are known to be conveniently pursued by means of a work vehicle within a confined building. Examples of such applications may be cultivation in greenhouses or sheds, storage operations in refrigerated cells, maintenance operations in stables, and the like. US20090018716 describes a parallel hybrid vehicle system utilizing the Power Take Off connection on an automatic transmission as a transfer port for a secondary device for both driving modes and stationary operation. The secondary device is a battery powered electric motor providing motive power or regenerative braking in driving mode or providing power to accessories typically mounted to a conventional PTO while stationary.

In view of such applications, the need is felt to adapt the existing vehicles to operate within confined buildings with reduced or null emissions of pollutants and unpleasant smells.

An object of the invention is to satisfy the above need in a simple and economic manner.

### SUMMARY OF THE INVENTION

Such an object is reached by a vehicle system as defined in claim 1.

The invention is also related to a use of an electric power pack for driving a vehicle, in particular within confined buildings.

According to the invention, the above object is also reached by the use of an electric power pack for driving a vehicle, as claimed in claim 7.

Further, the invention is related to a method for powering a vehicle with an electric power pack.

According to the invention, a method for powering a vehicle with an electric power pack is provided, as defined in claim 9.

### BRIEF DESCRIPTION OF DRAWINGS

For a better understanding of the invention, a preferred embodiment is described in the following, by way of a nonlimiting example, with reference to the attached drawings wherein:
- Figure 1 is a side view of a vehicle system, according to an embodiment of the invention; and
- Figure 2 is a schematic representation of the vehicle system of Figure 1.

### DETAILED DESCRIPTION OF THE INVENTION

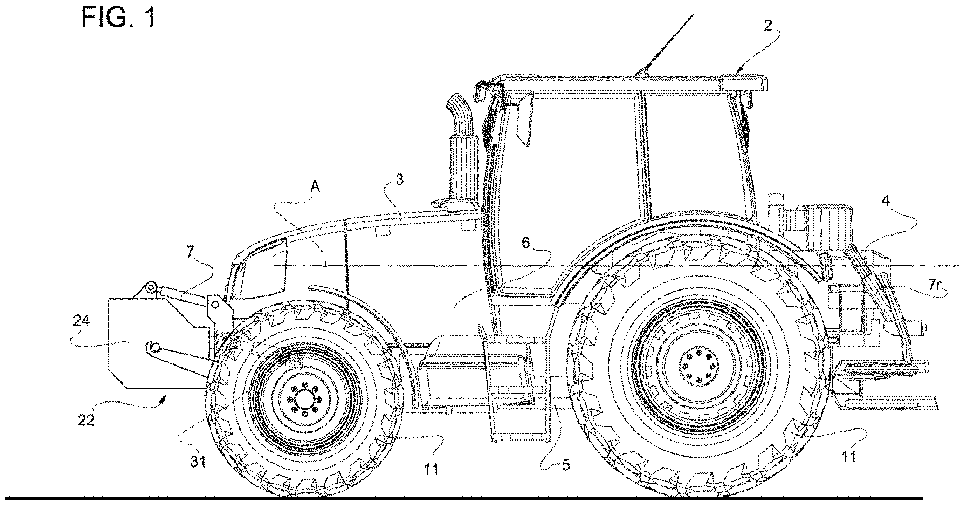

With reference to Figure 1, reference numeral 1 is used to indicate a vehicle system, which includes a vehicle 2, in particular an agricultural tractor intended for use within a confined building (not shown).

The vehicle 2 can be advanced along a normal advancing direction, such that the same vehicle 2 has a front portion 3 and a back portion 4 with respect to the advancing direction.

In Figure 1, the advancing direction is represented by a horizontal axis A.

The vehicle 2 comprises a chassis 5 and a vehicle body 6 that coats the chassis 5 and accordingly defines an interior and an exterior of the vehicle 2 itself.

The front and the back portions 3, 4 comprise respectively a front and a rear hitch 7, 7r suitable for the attachment of various kinds of respective known agricultural front and rear implements, which are not shown and not described in detail.

As for the front and the rear implements to be used, reference is made, for instance, to standards ISO 8759 and ISO 730, respectively.

Specifically, the front hitch 7 is a three-point hitch, in particular of the standard type.

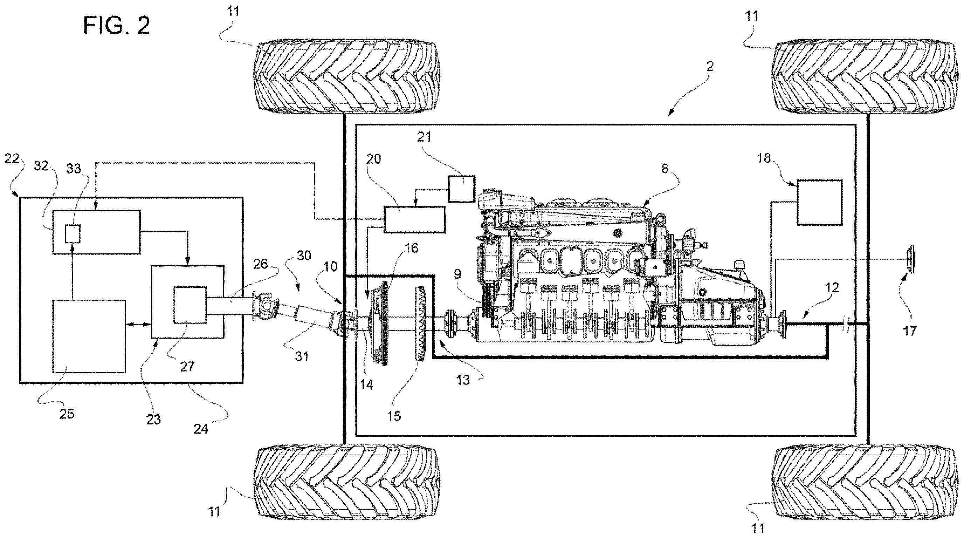

As shown in Figure 2, the vehicle 2 further comprises:
- an internal combustion engine 8 provided with an output shaft 9, in particular a crankshaft;
- a front power take-off 10 for the further attachment of the implements, such that the latter can be powered;
- a front and a rear pair of wheels 11;
- a first transmission or joint assembly 12 for transmitting power between the output shaft 9 and the wheels 11; and
- a second transmission or joint assembly 13 for transmitting power between the output shaft 9 and the front power take-off 10.

Specifically, the front power take-off 10 comprise a power take-off shaft 14, which partially extends on the inner of the vehicle 2 and externally protrudes from the vehicle body 6 along the advancing direction of the vehicle 2.

Both the first and the second transmission 12, 13 insist on the same output shaft 9, such that the latter can operate as a torque transfer member between the front power take-off 10 and the wheels 11.

For example, the first transmission 12 is of a known kind and, therefore, is only partially schematized in Figure 2 and not described in further detail.

On the other hand, with greater detail, the second transmission 13 comprises a geared transmission 15 and a clutch 16 selectively connecting the power take-off shaft 14 with the output shaft 9 via the geared transmission 15.

With the clutch 16 engaged, the output power from the internal combustion engine 8 is transmitted both to the wheels 11 and to the front power take-off 10, respectively through the first and the second transmission 12, 13. Otherwise, with the clutch 16 disengaged, the same output power is only transmitted to the wheels 11.

In addition, the vehicle 2 comprises a rear power take-off 17 and vehicle hydraulics 18 (schematically shown in Figure 2) that are each connected or can be each connected selectively to the output shaft 9, such that the output power from the internal combustion engine 8 may also be transmitted to the rear power take-off 17 and/or supplied to the vehicle hydraulics 18. Both rear power take-off 17 and vehicle hydraulics 18 are known-kind components of the vehicle 2 and are not described, therefore in further detail.

The vehicle 2 further comprises a control unit 20, which is connected to the internal combustion engine 8 to control the latter. The control unit 20 controls the engine 8, for example based on instructions from a driver of the vehicle 2.

More precisely, the driver depresses an accelerator pedal 21 being part of the vehicle 2 and being connected to the control unit 20. The control unit 20 is configured to detect a degree of depression of the accelerator pedal 21 and, based on the detected degree, to generate an appropriate command for the internal combustion engine 8.

Moreover, the control unit 20 is connected to the clutch 16 and is configured to command the engagement and the disengagement of the clutch 16 itself, for instance based on instructions from the driver.

In particular, the driver presses a button (not shown) of the vehicle 2 to request a change in the state of the clutch 16, e.g. from an engaged state to a disengaged state; the control unit 20 is configured to detect the button press and to command the clutch 16 accordingly.

The vehicle system 1 further comprises an electric power pack 22 that, in the embodiment shown, is arranged on the exterior of the vehicle 2, and is supported by the chassis 5 in a removable manner.

The electric power pack 22 comprises an external box 24 and further comprises, essentially:
- a motor-generator 23; and
- an energy storage unit 25 for storing energy generated by the motor-generator 23 and suppling the energy stored to the motor-generator 23;

Specifically, the energy storage unit 25 comprises a plurality of battery cells, which are individually connected to the motor-generator 23.

The motor-generator 23 and the energy storage unit 25 are housed within the external box 24, which is carried by the chassis 5.

The motor-generator 23 is coupled to the front power take-off 10 in a releasable manner; more precisely, the motor-generator 23 has a rotor shaft 26 that is coupled to the front power take-off 10.

Optionally, the motor-generator 23 comprises a gearbox or a speed reducer 27, in particular a gear reducer, having an output shaft defined by the rotor shaft 26.

In such a manner, a mechanical power outputted by the motor-generator 23 is transmitted to the front power take-off 10 and then sequentially to the output shaft 9 of the internal combustion engine 8 and the wheels 11, respectively through the first and second transmissions 12, 13.

Preferably, the mechanical power is also transmitted to the rear power take-off 18, to supply a possible implement attached thereon, and/or supplied to the vehicle hydraulics 18.

In other words, the motor-generator 23 can be used to operate the internal combustion engine 8 without supplying the latter with fuel. The use of the motor-generator 23 is intended to replace the use of fuel to drive the wheels 11 and thus the vehicle 2. Therefore, the motor-generator 23 and the internal combustion engine 8 are arranged in a serial fashion.

On one hand, no fuel is supplied to the internal combustion engine 8 when the motor-generator 23 outputs mechanical power; on the other hand, the motor-generator 23 is exclusively operated as a generator when the internal combustion engine 8 is supplied with fuel.

In the latter situation, the energy storage unit 25 enjoys the storage of the electric energy produced by the motor-generator 23.

In order to allow the coupling of the rotor shaft 26 to the power take-off shaft 14, i.e. the coupling between the motor-generator 23 and the front power take-off 10, the vehicle system 1 further comprises a third transmission or joint assembly 30.

With greater detail, the third transmission 30 allows the motor-generator 23 to be coupled to the power take-off 10 in a movable manner with respect thereto.

In particular, the third transmission 30 comprises a double cardan joint 31, which couples the rotor shaft 26 and the power take-off shaft 14, preferably in a direct manner.

Conveniently, the electric power pack 22 and specifically the external box 24 are attached to the front hitch 7 in a fixed position and in a detachable manner. The hitch 7 can be raised or lowered, so that the electric power pack 22 follows the movement of the front hitch 7.

The double cardan joint 31 allows the raising and the lowering of the electric power pack 22 through the front hitch 7, since allowing the movement of the motor-generator 23 along a rectilinear direction, which is vertical in the embodiment shown, with respect to the front power take-off 10.

In addition, the electric power pack 22 comprises another control unit 32, which is connected to the motor-generator 23 and is configured to control the latter for the output of mechanical power or for the generation of energy to be stored.

Control unit 32 includes an energy management block 33 connected to the energy storage unit 25 and configured to monitor or extract information about the actual amount of stored energy, i.e. the actual state of charge of each battery cell.

Control unit 32 controls the motor-generator 23 also based on the information extracted by the energy management block 33.

Control unit 20 of the vehicle 2 is also configured to control the motor-generator 23, in particular independently with respect to the control of the internal combustion engine 8.

Specifically, control unit 20 controls the motor-generator 23 indirectly via control unit 32.

In other words, control units 20, 32 are connected to each other and are configured to cooperate in order to control the motor-generator 23.

For this purpose, the vehicle 2 is provided e.g. with a not shown command, in particular a lever or a switch, that is connected to control unit 20 and can be operated by the driver to establish an electric drive mode or a fuel drive mode, in which respectively the vehicle 2 is driven by the motor-generator 23 or the internal combustion engine 8.

When the driver desires to drive the vehicle 2 by means of the motor-generator 23, namely to establish the electric drive mode, the same driver operates the command accordingly. The same occurs analogously when the driver desires to drive the vehicle 2 by means of the internal combustion engine 8, namely to establish a fuel drive mode.

With the electric drive mode on, control unit 20 is configured to generate command signals for controlling the motor-generator 23, in particular based on the detected degree of depression of the accelerator pedal 21.

Control unit 32 is configured to receive such command signals and then to control the motor-generator 23 directly, but based on the command signals themselves.

The operation of the vehicle system 1 is as follows.

When the vehicle 2 is within a confined building, such as a greenhouse or a refrigerating cell, the driver performs the attachment of the electric power pack 22 to the front hitch 7.

Then, the driver couples the motor-generator 23 to the front power take-off 10, connects the control units 20, 32, and boards the vehicle 2. Here, the driver establishes the electric drive mode through the aforementioned command.

The driver request via the accelerator pedal 21 is extracted by control unit 20, which generates a command signal for controlling the motor-generator 23 accordingly.

The command signal reaches control unit 32, which operates the motor-generator 23, to which the energy storage unit 25 provides the necessary amount of energy. The speed of output shaft 9 is higher that its low-idle speed and control unit 20 inhibits the supply of fuel to the internal combustion engine 8.

The energy management block 33 identifies the moment in which the energy stored by the energy storage unit 25 is not sufficient to drive the vehicle 2. In this case, control unit 20 receives a signal from control unit 32 indicating this insufficiency and automatically establishes the fuel drive mode. Here, the motor-generator 23 is controlled as a generator to recharge the energy storage unit 25.

In view of the foregoing, the advantages of the vehicle system 1 according to the invention are apparent. The vehicle 2 can be effectively driven within confined buildings thanks to the use of the power pack 22, without any emission of pollutants or smells.

Furthermore, since the output shaft 9 of the internal combustion engine 8 is driven by the front power take-off 10, the lubrication of the internal combustion engine 8 works normally. This allows the internal combustion engine 8 to be promptly turned on; warming-up operations become, therefore, unnecessary, e.g. after a prolonged usage of the vehicle 2 in the electric drive mode.

The electric power pack 22 is an easy-to-be-replaced external component with respect to the vehicle 2. Therefore, the electric power pack 22 can be coupled to already existing vehicles without significant adaptations of the same vehicles. In particular, only the vehicle control units have to be reconfigured to control the motor-generator 23, as well as appropriate wirings and network connections should be considered.

The front hitch 7 is particularly appropriate to support the electric power pack 22, since already designed for supporting heavy implements. The use of the double cardan joint 31 allows the lowering and raising of the front hitch 7 without compromising the connection between the motor-generator 23 and the front power take-off. This helps the driver in the coupling procedures of the electric power pack 22 to the vehicle 2.

It is clear that modifications can be made to the described vehicle system 1, which do not extend beyond the scope of protection defined by the claims.

The electric power pack 22 may be attached to the rear hitch 7r, instead of the front hitch 7, and coupled to the rear power take-off 17, instead of the front power take-off 10.

Moreover, the accelerator pedal 21 may be replaced by any other known device for the same purpose. Connections between control units 20, 32 may be wireless and/or the control of the drive modes may be autonomous, instead of being based on instructions from the driver.

Each of control units 20, 32, as well as the energy management block 33, may be formed by one or more separate and cooperating modules. Two modules are preferred for defining control unit 20.

Eventually, the disclosed transmissions may be constructively different and even consisting of a single joint.

## Claims

1. A vehicle system including a vehicle (2), the vehicle comprising:
- an internal combustion engine (8) provided with an output shaft (9);
- a power take-off (10) for the attachment of implements to the vehicle (2);
- at least a pair of wheels (11);
- first power transmission means (12) configured to allow power transmission between said output shaft (9) and said wheels (11); and
- second power transmission means (13) configured to allow power transmission between said output shaft (9) and said power take-off (10);
the vehicle system further including an electric power pack (22), which comprises:
- a motor-generator (23); and
- energy storage means (25) configured to store energy generated by said motor-generator (23) and supply the energy stored to said motor-generator (23); and
- a motor-generator control unit (32) configured to be connected to a vehicle control unit (20) in a releasable manner and to cooperate therewith to control said motor-generator (23),
wherein said motor-generator (23) is configured to be coupled to said power take-off (10) in a releasable manner, such that a mechanical output power provided by said motor-generator (23) is transmitted to said output shaft (9) through said second power transmission means (13) and thus to said wheels (11) through said first power transmission means (12), wherein said electric power pack (22) further comprises a motor-generator control unit (32) configured to be connected to said vehicle control unit (20) in a releasable manner and to cooperate therewith to control said motor-generator (23), and
wherein said vehicle control unit (20) is configured to control said motor-generator (23) by generating control signals for controlling said motor-generator (23);
said motor-generator control unit (32) being configured to:
- receive said control signals from said vehicle control unit (20); and
- operating said motor-generator (23) based on said control signals, and the vehicle system is **characterized in that** said vehicle control unit (20) is configured to inhibit fuel supply to said internal combustion engine (8) while controlling said motor-generator (23) to provide mechanical output power.

2. The vehicle system according to the claim 1, further comprising a chassis (5) and a vehicle body (6) coating the chassis (5), so as to define an interior and an exterior of the vehicle (2);
wherein said electric power pack (22) is supported in a removable manner by said chassis (5) on the exterior of the vehicle (2), when said motor-generator (23) is coupled to said power take-off (10).

3. The vehicle system of any one of the foregoing claims, further comprising a hitch (7), in particular a three-point hitch, which is coupled to said chassis;
said electric power pack (22) being configured to be attached to said hitch in a fixed position and in a detachable manner.

4. The vehicle system of any one of the foregoing claims, wherein said power take-off (10) is arranged on a front portion of the vehicle (2), according to a normal advancing direction of the vehicle (2).

5. The vehicle system of any one of the foregoing claims, wherein said motor-generator (23) is configured to be coupled to said power take-off (10) in a movable manner with respect thereto.

6. The vehicle system of claim 5, wherein said motor-generator (23) is configured to be coupled to said power take-off (10) by means of a double cardan joint (31), so as to be movable with respect to said power take-off (10) at least along a rectilinear direction, preferably vertical.

7. Use of an electric power pack (22) to provide a driving power to a vehicle (2), the vehicle (2) comprising:
- an internal combustion engine (8) provided with an output shaft (9);
- a power take-off (10) for the attachment of implements to the vehicle (2);
- at least a pair of wheels (11);
- first power transmission means (12) configured to allow power transmission between said output shaft (9) and said wheels (11); and
- second power transmission means (13) configured to allow power transmission between said output shaft (9) and said power take-off (10);
the electric power pack (22) comprising:
- a motor generator (23); and
- energy storage means (25) configured to store energy generated by said motor-generator (23) and supply the energy stored to said motor-generator (23); and
- a motor-generator control unit (32) configured to be connected to a vehicle control unit (20) in a releasable manner and to cooperate therewith to control said motor-generator (23),
wherein said motor-generator (23) is coupled to said power take-off (10) in a releasable manner, such that a mechanical output power provided by said motor-generator (23) is transmitted to said output shaft (9) through said second power transmission means (13) and thus to said wheels (11) through said first power transmission means (12), and
wherein said vehicle control unit (20) is configured to control said motor-generator (23) by generating control signals for controlling said motor-generator (23);
said motor-generator control unit (32) being configured to:
- receive said control signals from said vehicle control unit (20); and
- operating said motor-generator (23) based on said control signals,
wherein said vehicle control unit (20) is configured to inhibit fuel supply to said internal combustion engine (8) while controlling said motor-generator (23) to provide mechanical output power

8. The use of claim 7, within a confined building.

9. A method for powering a vehicle (2) with an electric power pack (22), the vehicle comprising:
- an internal combustion engine (8) provided with an output shaft (9);
- a power take-off (10) for the attachment of implements to the vehicle (2);
- at least a pair of wheels (11);
- first power transmission means (12) configured to allow power transmission between said output shaft (9) and said wheels (11); and
- second power transmission means (13) configured to allow power transmission between said output shaft (9) and said power take-off (10);
the electric power pack (22) comprising:
- a motor-generator (23); and
- energy storage means (25) configured to store energy generated by said motor-generator (23) and supply the energy stored to said motor-generator (23);
the method comprising the step of coupling said motor-generator (23) to said power take-off (10) in a releasable manner, such that a mechanical output power provided by said motor-generator (23) is transmitted to said output shaft (9) through said second power transmission means (13) and thus to said wheels (11) through said first power transmission means (12), the method comprising further the inhibition of fuel supply to said internal combustion engine (8) while controlling said motor-generator (23) to provide mechanical output power.

## Patentansprüche

1. Fahrzeugsystem umfassend ein Fahrzeug (2), wobei das Fahrzeug aufweist:
eine Brennkraftmaschine (8), die mit einer Ausgangswelle (9) versehen ist;
eine Zapfwelle (10) zur Anbringung von Arbeitsgeräten an dem Fahrzeug (2);
mindestens ein Paar von Rädern (11);
ein erstes Leistungsübertragungsmittel (12), das dazu eingerichtet ist, eine Leistungsübertragung zwischen der Ausgangswelle (9) und den Rädern (11) zu ermöglichen; und
ein zweites Leistungsübertragungsmittel (13), das dazu eingerichtet ist, eine Leistungsübertragung zwischen der Ausgangswelle (9) und der Zapfwelle (10) zu ermöglichen;
wobei das Fahrzeugsystem des Weiteren ein elektrisches Antriebsaggregat (22) umfasst, das aufweist:
einen Motor-Generator (23); und
ein Energiespeichermittel (25), das dazu eingerichtet ist, eine von dem Motor-Generator (23) erzeugte Energie zu speichern und den Motor-Generator (23) mit der gespeicherten Energie zu versorgen; und
eine Motor-Generator-Steuereinheit (32), die dazu eingerichtet ist, mit einer Fahrzeugsteuereinheit (20) in einer lösbaren Weise verbunden zu werden und mit dieser zur Steuerung des Motor-Generators (23) zusammen zu wirken,
wobei der Motor-Generator (23) dazu eingerichtet ist, mit der Zapfwelle (10) in einer lösbaren Weise gekoppelt zu werden, sodass eine mechanische Ausgangsleistung, die von dem Motor-Generator (23) bereitgestellt wird, über das zweite Leistungsübertragungsmittel (13) zu der Ausgangswelle (9) und damit über das erste Leistungsübertragungsmittel (12) an die Räder (11) übertragen wird,
wobei das elektrische Antriebsaggregat (22) des Weiteren eine Motor-Generator-Steuereinheit (32) aufweist, die dazu eingerichtet ist, mit der Fahrzeugsteuereinheit (20) in einer lösbaren Weise verbunden zu werden und mit dieser zur Steuerung des Motor-Generators (23) zusammen zu wirken, und
wobei die Fahrzeugsteuereinheit (20) dazu eingerichtet ist, den Motor-Generator (23) durch Erzeugung von Steuersignalen zur Steuerung des Motor-Generators (23) zu steuern;
wobei die Motor-Generator-Steuereinheit (32) eingerichtet ist zum:
Empfangen der Steuersignale von der Fahrzeugsteuereinheit (20); und
Betreiben des Motor-Generators (23) basierend auf den Steuersignalen, und
wobei das Fahrzeugsystem **dadurch gekennzeichnet ist, dass** die Fahrzeugsteuereinheit (20) dazu eingerichtet ist, die Kraftstoffzufuhr zu der Brennkraftmaschine (8) zu unterbinden, während der Motor-Generator (23) zur Bereitstellung einer mechanischen Ausgangsleistung gesteuert wird.

2. Fahrzeugsystem nach Anspruch 1, das des Weiteren einen Hauptrahmen (5) und einen Fahrzeugaufbau (6) aufweist, der den Hauptrahmen (5) umhüllt, um somit einen Innenbereich und einen Außenbereich des Fahrzeugs (2) festzulegen;
wobei das elektrische Antriebsaggregat (22) in einer abnehmbaren Weise von dem Hauptrahmen (5) an dem Außenbereich des Fahrzeugs (2) getragen wird, wenn der Motor-Generator (23) mit der Zapfwelle (10) gekoppelt ist.

3. Fahrzeugsystem nach einem der vorhergehenden Ansprüche, das des Weiteren eine Aufhängung (7), insbesondere eine Dreipunktaufhängung, aufweist, die mit dem Hauptrahmen gekoppelt ist;
wobei das elektrische Antriebsaggregat (22) dazu eingerichtet ist, an der Aufhängung in einer vorbestimmten Position und in einer abnehmbaren Weise angebracht zu werden.

4. Fahrzeugsystem nach einem der vorhergehenden Ansprüche, wobei die Zapfwelle (10) in einem vorderen Abschnitt des Fahrzeugs (2) gemäß einer normalen Fahrtrichtung des Fahrzeugs (2) angeordnet ist.

5. Fahrzeugsystem nach einem der vorhergehenden Ansprüche, wobei der Motor-Generator (23) dazu eingerichtet ist, mit der Zapfwelle (10) in einer bewegbaren Weise bezüglich dieser gekoppelt zu werden.

6. Fahrzeugsystem nach Anspruch 5, wobei der Motor-Generator (23) dazu eingerichtet ist, an die Zapfwelle (10) mittels eines Doppelkardangelenks (31) gekoppelt zu werden, um somit bezüglich der Zapfwelle (10) mindestens entlang einer geradlinigen Richtung, vorzugsweise vertikal, bewegbar zu sein.

7. Verwendung eines elektrischen Antriebsaggregats (22) zur Versorgung eines Fahrzeugs (2) mit einer Antriebsleistung, wobei das Fahrzeug (2) aufweist:
eine Brennkraftmaschine (8), die mit einer Ausgangswelle (9) versehen ist;
eine Zapfwelle (10) zur Anbringung von Arbeitsgeräten an dem Fahrzeug (2);
mindestens ein Paar von Rädern (11);
ein erstes Leistungsübertragungsmittel (12), das dazu eingerichtet ist, eine Leistungsübertragung zwischen der Ausgangswelle (9) und den Rädern (11) zu ermöglichen; und
ein zweites Leistungsübertragungsmittel (13), das dazu eingerichtet ist, eine Leistungsübertragung zwischen der Ausgangswelle (9) und der Zapfwelle (10) zu ermöglichen;
wobei das elektrische Antriebsaggregat (22) aufweist:
einen Motor-Generator (23); und
ein Energiespeichermittel (25), das dazu eingerichtet ist, eine von dem Motor-Generator (23) erzeugte Energie zu speichern und den Motor-Generator (23) mit der gespeicherten Energie zu versorgen; und
eine Motor-Generator-Steuereinheit (32), die dazu eingerichtet ist, mit einer Fahrzeugsteuereinheit (20) in einer lösbaren Weise verbunden zu werden und mit dieser zur Steuerung des Motor-Generators (23) zusammen zu wirken,
wobei der Motor-Generator (23) mit der Zapfwelle (10) in einer lösbaren Weise gekoppelt ist, sodass eine mechanische Ausgangsleistung, die von dem Motor-Generator (23) bereitgestellt wird, über das zweite Leistungsübertragungsmittel (13) zu der Ausgangswelle (9) und damit über das erste Leistungsübertragungsmittel (12) an die Räder (11) übertragen wird, und
wobei die Fahrzeugsteuereinheit (20) dazu eingerichtet ist, den Motor-Generator (23) durch Erzeugung von Steuersignalen zur Steuerung des Motor-Generators (23) zu steuern;
wobei die Motor-Generator-Steuereinheit (32) eingerichtet ist zum:
Empfangen der Steuersignale von der Fahrzeugsteuereinheit (20); und
Betreiben des Motor-Generators (23) basierend auf den Steuersignalen,
wobei die Fahrzeugsteuereinheit (20) dazu eingerichtet ist, die Kraftstoffzufuhr zu der Brennkraftmaschine (8) zu unterbinden, während der Motor-Generator (23) zur Bereitstellung einer mechanischen Ausgangsleistung gesteuert wird.

8. Verwendung nach Anspruch 7 innerhalb eines geschlossenen Gebäudes.

9. Verfahren zum Antrieb eines Fahrzeugs (2) mit einem elektrischen Antriebsaggregat (22), wobei das Fahrzeug aufweist:
eine Brennkraftmaschine (8), die mit einer Ausgangswelle (9) versehen ist;
eine Zapfwelle (10) zur Anbringung von Arbeitsgeräten an dem Fahrzeug (2);
mindestens ein Paar von Rädern (11);
ein erstes Leistungsübertragungsmittel (12), das dazu eingerichtet ist, eine Leistungsübertragung zwischen der Ausgangswelle (9) und den Rädern (11) zu ermöglichen; und
ein zweites Leistungsübertragungsmittel (13), das dazu eingerichtet ist, eine Leistungsübertragung zwischen der Ausgangswelle (9) und der Zapfwelle (10) zu ermöglichen;
wobei das elektrische Antriebsaggregat (22) aufweist:
einen Motor-Generator (23); und
ein Energiespeichermittel (25), das dazu eingerichtet ist, eine von dem Motor-Generator (23) erzeugte Energie zu speichern und den Motor-Generator (23) mit der gespeicherten Energie zu versorgen;
wobei das Verfahren den Schritt des Koppelns des Motor-Generators (23) mit der Zapfwelle (10) in einer lösbaren Weise aufweist, sodass eine mechanische Ausgangsleistung, die von dem Motor-Generator (23) bereitgestellt wird, über das zweite Leistungsübertragungsmittel (13) zu der Ausgangswelle (9) und damit über das erste Leistungsübertragungsmittel (12) an die Räder (11) übertragen wird,
wobei das Verfahren des Weiteren die Unterbindung der Kraftstoffzufuhr zu der Brennkraftmaschine (8) aufweist, während der Motor-Generator (23) zur Bereitstellung einer mechanischen Ausgangsleistung gesteuert wird.

## Revendications

1. - Système de véhicule comprenant un véhicule (2), le véhicule comprenant :
- un moteur à combustion interne (8) équipé d'un arbre de sortie (9) ;
- une prise de force (10) pour la fixation d'outils sur le véhicule (2) ;
- au moins une paire de roues (11) ;
- un premier moyen de transmission de puissance (12) configuré pour permettre la transmission de puissance entre ledit arbre de sortie (9) et lesdites roues (11) ; et
- un second moyen de transmission de puissance (13) configuré pour permettre la transmission de puissance entre ledit arbre de sortie (9) et ladite prise de force (10) ;
le système de véhicule comprend en outre un bloc d'alimentation électrique(22), qui comprend :
- un moteur-générateur (23) ; et
- des moyens de stockage d'énergie (25) configurés pour stocker l'énergie générée par ledit moteur-générateur (23) et fournir l'énergie stockée audit moteur-générateur (23) ; et
- une unité de commande du moteur-générateur (32) configurée pour être connectée à une unité de commande du véhicule (20) de manière amovible et pour coopérer avec elle afin de commander ledit moteur-générateur (23),
dans lequel ledit moteur-générateur (23) est configuré pour être couplé à ladite prise de force (10) de manière amovible, de sorte qu'une puissance de sortie mécanique fournie par ledit moteur-générateur (23) est transmise audit arbre de sortie (9) par l'intermédiaire dudit second moyen de transmission de puissance (13) et donc auxdites roues (11) par l'intermédiaire dudit premier moyen de transmission de puissance (12), dans lequel ledit bloc d'alimentation électrique (22) comprend en outre une unité de commande du moteur-générateur (32) configurée pour être connectée à ladite unité de commande du véhicule (20) de manière amovible et pour coopérer avec elle afin de commander ledit moteur-générateur (23), et
dans lequel ladite unité de commande du véhicule (20) est configurée pour commander ledit moteur-générateur (23) en générant des signaux de commande pour commander ledit moteur-générateur (23) ;
ladite unité de commande du moteur-générateur (32) étant configurée pour :
- recevoir lesdits signaux de commande de l'unité de commande du véhicule (20) ; et
- faire fonctionner ledit moteur-générateur (23) sur la base desdits signaux de commande, et
le système de véhicule est **caractérisé par le fait que** l'unité de commande du véhicule (20) est configurée pour empêcher l'alimentation en carburant dudit moteur à combustion interne (8) tout en commandant ledit moteur-générateur (23) pour fournir une puissance de sortie mécanique.

2. Système de véhicule selon la revendication 1, comprenant en outre un châssis (5) et une carrosserie (6) recouvrant le châssis (5), de manière à définir un intérieur et un extérieur du véhicule (2) ;
dans lequel ledit bloc d'alimentation électrique (22) est supporté de manière amovible par ledit châssis (5) à l'extérieur du véhicule (2), lorsque ledit moteur-générateur (23) est couplé à ladite prise de force (10).

3. Système de véhicule selon l'une quelconque des revendications précédentes, comprenant en outre un attelage (7), en particulier un attelage à trois points, qui est couplé audit châssis ;
ledit bloc d'alimentation électrique (22) étant configuré pour être attaché à l'attelage dans une position fixe et de manière amovible.

4. Système de véhicule selon l'une quelconque des revendications précédentes, dans lequel ladite prise de force (10) est disposée sur une partie avant du véhicule (2), selon une direction normale d'avancement du véhicule (2).

5. Système de véhicule selon l'une quelconque des revendications précédentes, dans lequel ledit moteur-générateur (23) est configuré pour être couplé à ladite prise de force (10) de manière mobile par rapport à celle-ci.

6. Système de véhicule selon la revendication 5, dans lequel ledit moteur-générateur (23) est configuré pour être couplé à ladite prise de force (10) au moyen d'un double joint de cardan (31), de manière à être mobile par rapport à ladite prise de force (10) au moins le long d'une direction rectiligne, de préférence verticale.

7. Utilisation d'un bloc d'alimentation électrique (22) pour fournir une puissance d'entraînement à un véhicule (2), le véhicule (2) comprenant :
- un moteur à combustion interne (8) équipé d'un arbre de sortie (9) ;
- une prise de force (10) pour la fixation d'outils sur le véhicule (2) ;
- au moins une paire de roues (11) ;
- un premier moyen de transmission de puissance (12) configuré pour permettre la transmission de puissance entre ledit arbre de sortie (9) et lesdites roues (11) ; et
- un second moyen de transmission de puissance (13) configuré pour permettre la transmission de puissance entre ledit arbre de sortie (9) et ladite prise de force (10) ;
le bloc d'alimentation électrique (22) comprenant :
- un moteur-générateur (23) ; et
- des moyens de stockage d'énergie (25) configurés pour stocker l'énergie générée par ledit moteur-générateur (23) et fournir l'énergie stockée audit moteur-générateur (23) ; et
- une unité de commande du moteur-générateur (32) configurée pour être connectée à une unité de commande du véhicule (20) de manière amovible et pour coopérer avec elle afin de commander ledit moteur-générateur (23),
dans lequel ledit moteur-générateur (23) est couplé à ladite prise de force (10) d'une manière amovible, de sorte qu'une puissance de sortie mécanique fournie par ledit moteur-générateur (23) est transmise audit arbre de sortie (9) par l'intermédiaire dudit second moyen de transmission de puissance (13) et donc auxdites roues (11) par l'intermédiaire dudit premier moyen de transmission de puissance (12), et dans lequel ladite unité de commande du véhicule (20) est configurée pour commander ledit moteur-générateur (23) en générant des signaux de commande pour commander ledit moteur-générateur (23) ;
ladite unité de commande du moteur-générateur (32) est configurée pour :
- recevoir lesdits signaux de commande de ladite unité de commande du véhicule (20) ; et
- faire fonctionner ledit moteur-générateur (23) sur la base desdits signaux de commande,
dans lequel ladite unité de commande du véhicule (20) est configurée pour empêcher l'alimentation en carburant dudit moteur à combustion interne (8) tout en commandant ledit moteur-générateur (23) pour fournir une puissance de sortie mécanique.

8. Utilisation de la revendication 7, à l'intérieur d'un bâtiment confiné.

9. Procédé pour alimenter un véhicule (2) avec un bloc d'alimentation électrique (22), le véhicule comprenant :
- un moteur à combustion interne (8) équipé d'un arbre de sortie (9) ;
- une prise de force (10) pour la fixation d'outils sur le véhicule (2) ;
- au moins une paire de roues (11) ;
- un premier moyen de transmission de puissance (12) configuré pour permettre la transmission de puissance entre ledit arbre de sortie (9) et lesdites roues (11) ; et
- un second moyen de transmission de puissance (13) configuré pour permettre la transmission de puissance entre ledit arbre de sortie (9) et ladite prise de force (10) ;
le bloc d'alimentation électrique (22) comprenant :
- un moteur-générateur (23) ; et
- des moyens de stockage d'énergie (25) configurés pour stocker l'énergie générée par ledit moteur-générateur (23) et fournir l'énergie stockée audit moteur-générateur (23) ;
le procédé comprenant l'étape consistant à coupler ledit moteur-générateur (23) à ladite prise de force (10) de manière amovible, de sorte qu'une puissance de sortie mécanique fournie par ledit moteur-générateur (23) est transmise audit arbre de sortie (9) par l'intermédiaire dudit second moyen de transmission de puissance (13) et donc auxdites roues (11) par l'intermédiaire dudit premier moyen de transmission de puissance (12), le procédé comprenant en outre l'inhibition de l'alimentation en carburant dudit moteur à combustion interne (8) tout en commandant ledit moteur-générateur (23) afin de fournir une puissance de sortie mécanique.
